# EUROPÄISCHE PATENTSCHRIFT

(11) **EP 0 716 640 B1**
(45) Veröffentlichungstag und Bekanntmachung des Hinweises auf die Patenterteilung: **28.05.1997**
(21) Anmeldenummer: 94915105.4
(22) Anmeldetag: 23.04.1994
(51) Int. Cl.: C01B 15/10, B01J 2/16

(54) **VERFAHREN ZUR HERSTELLUNG VON GRANULATFÖRMIGEN NATRIUMPERCARBONAT**
PROCESS FOR PRODUCING GRANULATED SODIUM PERCARBONATE
PROCEDE DE PRODUCTION DE PERCARBONATE DE SODIUM SOUS FORME DE GRANULES

(30) Priorität: 31.08.1993 DE 4329205
(43) Veröffentlichungstag der Anmeldung: 19.06.1996
(73) Patentinhaber: Degussa Aktiengesellschaft, 60311 Frankfurt (DE)
(72) Erfinder: BEWERSDORF, Martin, D-63571 Gelnhausen (DE); KLASEN, Claas-Jürgen, D-63579 Freigericht (DE); LOOK-HERBER, Petra, D-63755 Alzenau (DE); BERTSCH-FRANK, Birgit, D-79618 Rheinfelden (DE); LIESER, Thomas, D-63457 Hanau (DE); MÜLLER, Klaus, D-63594 Hasselroth (DE)
(86) Internationale Anmeldenummer: EP9401270
(87) Internationale Veröffentlichungsnummer: WO9506615

(56) Entgegenhaltungen:
- BE-A- 727 276
- FR-A- 2 359 789
- CHEMIE. INGENIEUR. TECHNIK, Bd.62, Nr.10, 1990, WEINHEIM DE Seiten 822 - 834 H. UHLEMANN 'Kontinuierliche Wirbelschicht-Sprühgranulation' in der Anmeldung erwähnt

## Beschreibung

Die Erfindung betrifft ein Verfahren zur Herstellung von granulatförmigem Natriumpercarbonat durch Wirbelschicht-Sprühgranulation.

Zur Herstellung von Natriumpercarbonat der Formel 2 Na₂CO₃^{.}3 H₂O₂ sind unterschiedliche Verfahrensprinzipien bekannt: (i) Umsetzung von Wasserstoffperoxid mit Natriumcarbonat in wäßriger Phase, Kristallisation des Natriumpercarbonats und Abtrennung desselben von der Mutterlauge; (ii) Umsetzung fester Soda mit wäßrigem Wasserstoffperoxid: (iii) Wirbelschicht-Sprühgranulation, wobei eine Wasserstoffperoxid- und eine Sodalösung in einer Wirbelschichtapparatur auf Natriumpercarbonatkeime gesprüht werden und gleichzeitig Wasser verdampft wird. Das Verfahrensprinzip gemäß (i) wird zwar im technischen Umfang genutzt, es sind jedoch Hilfsstoffe, wie Natriumchlorid zur Aussalzung und Metaphosphate zur Steuerung der Kristallisation erforderlich, und zusätzlich bedarf es einer Reinigung und/oder Teilausschleusung der Mutterlauge, um zu einer guten Produktqualität zu gelangen. Die Qualität von nach dem Verfahrensprinzip (ii) hergestelltem Natriumpercarbo.nat reicht wegen auftretender Inhomogenitäten und unbefriedigender Lagerstabilität meist nicht an jene von gemäß (i) oder (iii) hergestelltem Natriumpercarbonat heran.

Verfahren gemäß dem Prinzip (iii) gewinnen zunehmend an Interesse, weil sie zu keinem Abwasseranfall und bei sehr hoher Ausbeute auch zu einem abriebfesten Natriumpercarbonat führen. Die DE-Patentschrift 20 60 971 lehrt ein solches Verfahren: Hiernach werden eine Wirbelschicht, welche Natriumpercarbonatkeime enthält, deren Dimensionen kleiner als diejenigen der herzustellenden Granulatteilchen sind, kontinuierlich mit einer Natriumpercarbonatlösung oder Natriumpercarbonatsuspension oder getrennt und gleichzeitig mit einer wäßrigen Wasserstoffperoxid- und einer wäßrigen Natriumcarbonatlösung beschickt und kontinuierlich Wasser aus dem wäßrigen Natriumpercarbonat enthaltenden Milieu verdampft und Granulatteilchen von bestimmter Größe aus der Wirbelschicht abgezogen. Bei der Verwendung einer Natriumpercarbonat- oder einer H₂O₂- und einer Na₂CO₃-Lösung werden gleichzeitig Keime in die Wirbelschicht eingespeist.

Das vorstehend gewürdigte Verfahren weist eine Reihe von Nachteilen auf: Bei einer Ausführungsform muß zunächst eine Natriumpercarbonatlösung oder -suspension erzeugt werden, was einen zusätzlichen Verfahrensschritt bedingt. Das Beschicken einer Wirbelschicht mit einer Natriumpercarbonat-Suspension oder an Natriumpercarbonat übersättigten Lösung ist zudem störanfällig, weil es rasch zu Verstopfungen der verwendeten Einspritzdüse kommt. Im Falle der Verwendung einer verdünnten Natriumpercarbonatlösung muß andererseits viel Wasser verdampft werden, wodurch die Kosten steigen.

Auf Probleme einer weiteren in der DE 20 60 971 C3 gelehrten Ausführungsform wird in der DE-Patentschrift 27 33 935 aufmerksam gemacht: Beim Einsatz einer wäßrigen Wasserstoffperoxid- und einer wäßrigen Natriumcarbonatlösung unter Verwendung von zwei getrennten Sprühdüsen, etwa üblichen Zweistoffdüsen zum Versprühen einer Lösung unter Mitverwendung von Luft als Treibgas, ist es schwierig, in der Wirbelschicht eine ausreichend innige Mischung der beiden Lösungen zu erreichen, was aber zum Erhalt homogener Natriumpercarbonatpartikel erforderlich ist. Werden jedoch die beiden Lösungen gemeinsam durch ein und dieselbe Einspritzdüse in die Wirbelschicht eingebracht, erfolgt nach meist kurzer Betriebszeit in der Einspritzdüse eine Kristallisation, was zu Verstopfungen führt und Betriebsunterbrechungen zur Folge hat.

Zur Behebung der zuvor genannten Probleme wird in der DE 27 33 935 C2 vorgeschlagen, für beide Lösungen eine gemeinsame Einspritzdüse zu verwenden und zur Vermeidung einer Verstopfung der Einspritzdüse mindestens in einer der beiden Lösungen ein Metaphosphat zu lösen. Das Vermischen der beiden Lösungen erfolgt im Inneren oder am Einlaß der Einspritzdüse. Die Einsatzmenge an Metaphosphat liegt zweckmäßigerweise zwischen 0,1 und 20 g pro kg Natriumpercarbonat.

Die Mitverwendung eines Metaphosphats im Verfahren der DE 27 33 935 C2 erhöht einerseits die Rohstoffkosten, und andererseits wird mit dem Phosphat eine Komponente in das Natirumpercarbonat und damit in die dieses enthaltende Wasch-, Bleich- und Reinigungsmittel eingebracht, an deren Eliminierung die Fachwelt aus ökologischen Gründen zunehmend stärker interessiert ist.

Aufgabe der vorliegenden Erfindung ist somit, ein Verfahren zur Herstellung von granulatförmigem Natriumpercarbonat der Formel 2 Na₂CO₃^{.}3 H₂O₂ durch Wirbelschicht-Sprühgranulation, wobei eine wäßrige Wasserstoffperoxidlösung und eine wäßrige Natriumcarbonatlösung mit Hilfe einer einzigen Sprühdüse in eine Wirbelschicht, die Keime enthält, deren Abmessungen geringer sind als die der herzustellenden Granulatteilchen, gesprüht werden und gleichzeitig Wasser bei einer Wirbelschichttemperatur im Bereich von 40 bis 95°C verdampft wird, aufzuzeigen, das die Nachteile des aus der DE 27 33 935 C2 bekannten Verfahrens nicht aufweist.

Die Aufgabe wird dadurch gelöst, daß man zum Versprühen der beiden Lösungen, welchen kein phosphorhaltiger Kristallisationsinhibitor zugesetzt wird, eine Dreistoffzerstäuberdüse mit externer Mischung der Lösungen verwendet.

Zweckmäßigerweise wird eine einen Düsenkörper und ein Düsenmundstück umfassende Dreistoffzerstäuberdüse verwendet, deren Düsenmundstück ein Zentralrohr und zwei darum koaxial angeordnete Mantelrohre aufweist und dessen Zentralrohr an der Düsenspitze um mindestens einen Zentralrohrradius über die Enden der Mantelrohre hinausreicht, wobei dem Zentralrohr und dem zwischen diesem und dem inneren Mantelrohr gebildeten Ringspalt jeweils eine der Lösungen und dem zwischen den Mantelrohren gebildeten äußeren Ringspalt ein Treibgas zugeführt wird.

Durch Verwendung einer Dreistoffzerstäuberdüse mit externer Mischung werden die beiden jeweils einen Reaktionspartner enthaltenden Lösungen mittels einer einzigen Düse in die Wirbelschicht gesprüht, wobei die Mischung der beiden Lösungen und daran anschließend die Bildung von Natriumpercarbonat außerhalb der Düse erfolgen, bevor das Wasser der Flüssigkeitströpfchen verdampft. Auf diese Weise gelangt man zu homogen aufgebauten Natriumpercarbonatpartikeln, ohne daß es zu Verstopfungen in der Düse kommt. Durch Verwendung einer Düse mit einem anspruchsgemäßen Düsenmundstück und insbesondere einem solchen mit einer Zentralrohrverlängerung lassen sich Ankrustungen an der Düsenspitze und damit gegebenenfalls Betriebsstörungen auch bei langer Betriebsdauer vermeiden. Gleichzeitig erübrigt sich der Einsatz eines Metaphosphats oder eines anderen phosphorhaltigen Kristallisationsinhibitors, so daß das hergestellte granulatförmige Natriumpercarbonat im wesentlichen frei von Phosphorverbindungen ist. Ein sehr geringer Phosphatgehalt im Natriumpercarbonat wird dann nicht ausgeschlossen, wenn handelsüblich mit Phosphaten stabilisiertes Wasserstoffperoxid zum Einsatz kommt.

Das Grundprinzip der zu verwendenden Dreistoffzerstäuberdüse ist demjenigen ähnlich, wie es von handelsüblichen Zweistoffdüsen bekannt ist, sie enthält aber zusätzlich Vorrichtungen zum Einbringen und zur Führung der zweiten Flüssigkeit in der Düse. Die Düse umfaßt also einen Düsenkörper mit voneinander getrennten Kanälen und Anschlüssen für die Medien sowie ein Düsenmundstück mit den anspruchsgemäßen Merkmalen.

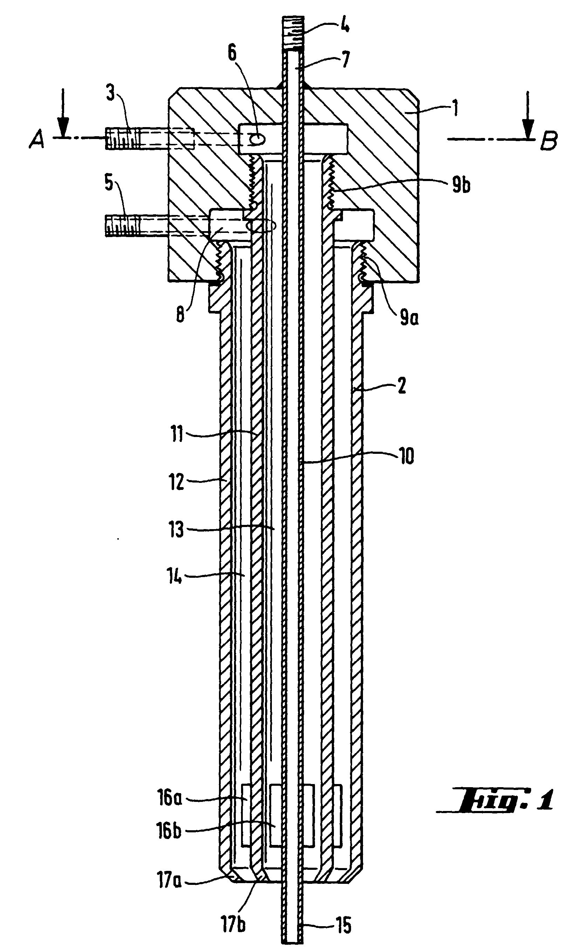

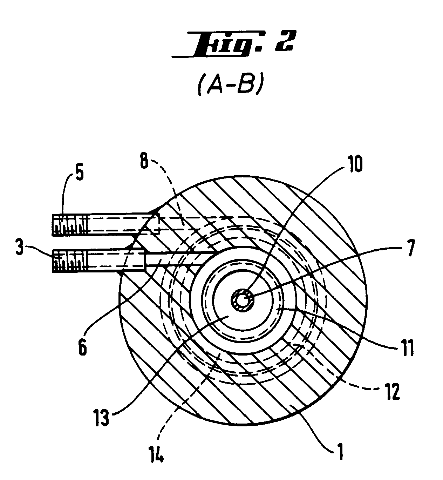

Anhand der Figuren 1 und 2 wird der Aufbau einer zweckmäßigen Dreistoffzerstäuberdüse dargelegt; gleichzeitig wird auf die besonders bevorzugte Ausgestaltung des Düsenmundstücks hingewiesen: Figur 1 zeigt eine besonders bevorzugte Dreistoffzerstäuberdüse im Längsschnitt; Figur 2 zeigt einen Querschnitt durch die in Figur 1 angegebene Ebene A-B:

Ein Düsenkörper (1) ist derart mit einem Düsenmundstück (2) verbunden, daß die zu fördernden flüssigen Medien erst außerhalb der Düse miteinander in Kontakt kommen. Die Verbindung zwischen (1) und (2) kann in Form eines Steck-, Bajonett- oder Schraubverschlusses oder Muffen oder dergleichen ausgebildet sein. In der bevorzugten Ausbildungsform gemäß Figur 1 sind die Mantelrohre (11) und (12) des Düsenmundstücks mittels Schraubgewinden (9a und b) mit dem Düsenkörper verbunden. Der Düsenkörper enthält die Anschlüsse (3) und (4) für die beiden Flüssigkeiten und (5) für das Treibgas sowie die voneinander getrennten Kanäle (6) und (7) für die beiden Flüssigkeiten und (8) für das Treibgas.

Das Düsenmundstück (1) umfaßt ein Zentralrohr (10) und zwei darum koaxial angeordnete Mantelrohre (11) und (12). Das Zentralrohr (10) steht mit dem Kanal (7) in Verbindung; in Figur 1 sind der Kanal (7) und das Zentralrohr (10) als durchgehendes Rohr ausgebildet. Der zwischen dem Zentralrohr (10) und inneren Mantelrohr (11) gebildete Ringspalt (13) steht mit dem Kanal (6) und der zwischen dem inneren (11) und dem äußeren (12) Mantelrohr gebildete Ringspalt (14) mit dem Kanal (8) in Verbindung. Wesentliches Merkmal einer besonders bevorzugten Ausführung ist die Zentralrohrverlängerung (15), welche an der Düsenspitze über die Enden der Mantelrohre hinausreicht. Eines oder beide Mantelrohre sowie das Zentralrohr können sich zur Düsenspitze hin verjüngen - (17a) und (17b) in Figur 1 -, um die Austrittsgeschwindigkeit der Medien zu erhöhen und ein AufreiBen des aus den Ringspalten austretenden Flüssigkeitsstroms und Treibgasstroms zu begünstigen. Zusätzlich können im Zentralrohr (10) bzw. dessen Verlängerung (15) und/oder in einem oder beiden Ringspalten Drallkörper (16a und b) enthalten sein. Das Treibmittel für die Düse kann Luft oder ein anderes inertes Gas, wie etwa Stickstoff oder auch überhitzter Wasserdampf, sein.

Gemäß einer bevorzugten Ausführungsform der Düse reicht das Zentralrohr des Düsenmundstücks um mindestens einen Zentralrohrradius, vorzugsweise um 2 bis 10, insbesondere 3 bis 6 Zentralrohrradien über die Enden der Mantelrohre hinaus. Die Mantelrohre enden vorzugsweise auf gleicher Höhe. Die Mantelrohre können aber auch auf unterschiedlicher Höhe enden, jedoch muß die anspruchsgemäße Zentralrohrverlängerung gegenüber beiden Mantelrohren gewährleistet sein. Sofern das äußere Mantelrohr über das innere Mantelrohr reicht, werden die Flüssigkeit im Ringspalt und das Treibgas innerhalb der Düse vorgemischt, die Flüssigkeiten selbst kommen aber erst außerhalb der Düse miteinander in Kontakt. Die optimale Größe der Zentralrohrverlängerung richtet sich nach dem Zentralrohrradius und dem Strömungsquerschnitt am Austritt des inneren Ringspalts. Mit zunehmendem Zentralrohrradius ist es im allgemeinen günstig, die Zentralrohrverlängerung zu verkürzen - bei einem Zentralrohrradius von beispielsweise mindestens 2 mm wird die Zentralrohrverlängerung meist zwischen 3 und 5 Zentralrohrradien betragen.

Im Prinzip können die wäßrige H₂O₂- oder die Na₂CO₃-Lösung durch das Zentralrohr der Düse und die entsprechend andere Lösung durch den benachbarten Ringspalt gefördert werden. Vorzugsweise wird aber die Lösung mit dem geringeren Volumen - bei bevorzugten Konzentrationen der Lösungen wird dies die Wasserstoffperoxidlösung sein - durch das Zentralrohr geführt.

Die wäßrige Wasserstoffperoxidlösung und die wäßrige Natriumcarbonatlösung werden in einem solchen Mengenverhältnis in die in einer Vorrichtung zur Wirbelschicht-Sprühgranulation aufrechterhaltene Wirbelschicht eingebracht, daß das Molverhältnis von Na₂CO₃ zu H₂O₂ im Bereich zwischen 1 zu 1,4 und 1 zu 1,7 liegt; ein Molverhältnis zwischen 1 zu 1,5 und 1 zu 1,65 wird bevorzugt.

Die Konzentration der Lösungen kann in weiten Grenzen liegen; zweckmäßigerweise werden möglichst hohe Konzentrationen gewählt, um die zu verdampfende Wassermenge niedrig zu halten. Gemäß einer besonders bevorzugten Ausführungsform werden die Na₂CO₃- und die H₂O₂-Lösung eine sehr hohe Konzentration aufweisen, so daß die im Mischbereich vor der Düsenspitze zunächst in Tröpfchenform vorliegende Lösung an Natriumpercarbonat übersättigt ist. Üblicherweise enthält die wäßrige Wasserstoffperoxidlösung 30 bis 75 Gew.-%, vorzugsweise 40 bis 70 Gew.-%, H₂O₂. Die Na₂CO₃-Konzentration der Natriumcarbonatlösung liegt zweckmäßigerweise über 10 Gew.-% Na₂CO₃, vorzugsweise zwischen 20 Gew.-%, und der Sättigungskonzentration bei der jeweiligen Temperatur; besonders bevorzugt liegt die Na₂CO₃-Konzentration um 30 Gew.-Z. Eine oder beide Lösungen, vorzugsweise aber die Sodalösung, können anstelle bei üblicher Lagertemperatur in auf 30 bis 70 °C vorerwärmter Form eingesetzt werden.

Bezüglich der Durchführung der Wirbelschicht-Sprühgranulation wird auf die zum Stand der Technik angeführten Dokumente verwiesen. In der Wirbelschicht muß bei kontinuierlichem Betrieb stets eine ausreichende Zahl an Keimen zugegen sein. Zur Steuerung der Kornverteilung werden der Wirbelschicht zwischen 0 und 30 kg, vorzugsweise zwischen 1 und 10 kg Keime pro 100 kg aus der Wirbelschicht abgezogenem granulatförmigen Natriumpercarbonat zugeführt. Die Gewichtsmenge an Keimen richtet sich nach dem gewünschten Kornspektrum und insbesondere der Größe der Keime. Eine Optimierung der Betriebsbedingungen bezüglich der Keimeinbringung bei gewünschter Wirbelschichttemperatur ist erforderlich, um zu einem stationären Betriebszustand zu gelangen. Im Falle der Rückführung einer zu großen Menge an sehr feinteiligem Material als Keime kann es zu einem zu geringem Partikelwachstum, im Falle einer zu hohen Feuchte in der Wirbelschicht zu einer unerwünschten Aggregatbildung kommen. Bezüglich der allgemeinen Technik der Wirbelschicht-Sprühgranulation, der wechselseitigen Beeinflussung der Betriebsparameter und Steuerung der Partikelgröße und -verteilung sowie geeigneter Vorrichtungen zur kontinuierlichen Wirbelschicht-Sprühgranulation wird auf den Artikel von H. Uhlemann in Chem.-Ing. Technik 62 (1990), Nr. 10, S. 822-834 verwiesen.

Die Temperatur der Wirbelschicht wird zwischen 40 und 95 °C, vorzugsweise zwichen 40 und 80 °C und insbesondere zwischen 50 und 70 °C gehalten.

Die Temperatur der Zuluft zur Trocknung und Aufrechterhaltung der Wirbelschicht wird auf einen Wert oberhalb 120 °C, vorzugsweise zwischen 200 und 400 °C und insbesondere zwischen 300 und 400 °C eingestellt. Der Fachmann wird die Temperatur und den Massenstrom der Zuluft so einstellen, daß eine gut fluidisierte Wirbelschicht resultiert, die geforderte Leistung erbracht werden kann und keine zu große Menge Produkt aus einer nachgeschalteten Staubabscheidung zurückgeführt werden muß. Üblicherweise liegt die Geschwindigkeit der Trocknungsluft im Leerrohr zwischen 1 und 4 m/s. Im allgemeinen wird die Wirbelschichtapparatur so betrieben, daß im Bereich der Wirbelschicht etwa Normaldruck (etwa 1 bar) herrscht; es ist aber auch möglich, bei Unter- oder Überdruck zu arbeiten. In der Wirbelschicht-Sprühgranulationsanlage können eine oder mehrere Dreistoffzerstäuberdüsen angeordnet sein, wobei die Sprührichtung dem Trocknungsluftstrom im wesentlichen gleich- oder entgegengerichtet sein kann oder eine Zwischenposition einnimmt.

Es hat sich im kontinuierlichen Betrieb als zweckmäßig erwiesen, das Natriumpercarbonat mit einem Restfeuchtegehalt bis zu 10 Gew.-%, vorzugsweise zwischen 3 und 9 Gew.-% und insbesondere zwischen 5 und 8 Gew.-% aus der Wirbelschicht auszutragen und, soweit erwünscht, in einer nachgeschalteten Vorrichtung auf einen Restfeuchtegehalt handelsüblicher Ware (unter 1 Gew.-%) zu trocknen, oder einer Nachbehandlung zuzuführen. Als Nachbehandlung kommen insbesondere Verfahren zum Aufbringen einer Umhüllung auf die Partikel zwecks Erhöhung der Lagerstabilität infrage. Eine solche Nachbehandlung beruht vorzugsweise darauf, daß eine oder mehrere Hüllkomponenten, wie z. B. Borverbindungen, Soda, Natriumsulfat, Magnesiumsulfat und Wasserglas, enthaltende Lösungen in einer Wirbelschicht auf das zuvor hergestellte granulatförmige Natriumpercarbonat unter gleichzeitigem Verdampfen von Wasser und Ausbildung einer festhaftenden Hüllschicht aufgebracht wird.

Bei Bedarf können der zu versprühenden H₂O₂- und/oder Na₂CO₃-Lösung auch Additive - ausgenommen phosphorhaltige Kristallisationsinhibitoren - zugesetzt werden, um die Produkteigenschaften zu beeinflussen und insbesondere die Aktivsauerstoffstabilität des eingesetzten Wasserstoffperoxids und des herzustellenden Natriumpercarbonats zu erhöhen. Als stabilitätserhöhende Additive kommen vorzugsweise Magnesiumsalze - üblicherweise der H₂O₂-Lösung in Form des Sulfats zugesetzt - und Wasserglas - meist der Sodalösung zugesetzt - infrage; weitere Additive können beispielsweise Stannate, Komplexbildner und Dipicolinsäure sein. Phosphorfreie Kristallisationsverzögerer können zwar anwesend sein, sie werden aber üblicherweise nicht gebraucht. Durch Zugabe oberflächenaktiver Stoffe kann zum Beispiel die Lösegeschwindigkeit erhöht werden.

Bei den Vorrichtungen zur Wirbelschicht-Sprühgranulation kann es sich um solche handeln, wie sie in der DE 27 33 935, der EP 0 332 929 B1 sowie in dem bereits zitierten Artikel von H. Uhlemann beschrieben werden. Das Wirbelbett kann mit einer oder vorzugsweise mit mehreren erfindungsgemäßen Dreistoffzerstäuberdüsen ausgestattet werden. Vorrichtungen mit einer Keimeinschleusung und klassierend wirkendem Austrag des Granulats werden bevorzugt. Die in die Wirbelschicht einzuschleusenden Keime können aus der Staubabscheidung, Siebung und/oder einer partiellen Zerkleinerung stammen.

Neben den vorgenannten Vorrichtungen mit einer stationären Wirbelschicht kann das Verfahren auch in einer Wirbelschicht-Fließrinne, welche mit mehreren hintereinander angeordneten Düsen ausgestattet ist, durchgeführt werden; am Ende der Fließrinne wird klassiert und Unterkorn sowie gegebenenfalls zerkleinertes Überkorn in die Fließrinne zurückgeführt.

Obgleich das Verfahren der Erfindung im technischem Maßstab vorzugsweise kontinuierlich, also mit kontinuierlicher Zuführung der Lösungen und Ausschleusung von Granulat der gewünschten Größe durchgeführt wird, kann es auch in diskontinuierlicher Weise - Abbrechen des Sprühens bei Erreichen des gewünschten Kornspektrums und dann Austrag des Granulats - betrieben werden.

Durch das erfindungsgemäße Verfahren ist es möglich, ausgehend von einer Wasserstoffperoxid- und einer Natriumcarbonatlösung granulatförmiges Natriumpercarbonat durch Wirbelschicht-Sprühgranulation im technischen Maßstab ohne Betriebsstörungen durch Verstopfen oder Verkrusten der Düsen in nahezu quantitativer Ausbeute mit hohem Aktivsauerstoffgehalt, hoher Abriebfestigkeit, hohem Schüttgewicht und sehr guter Lagerbeständigkeit zu erhalten, ohne Kristallisationsinhibitoren verwenden zu müssen. Das erfindungsgemäß erhältliche Produkt kann unmittelbar im Anschluß an seine Herstellung zwecks Stabilitätserhöhung in an sich bekannter Weise umhüllt werden, wobei wegen des dichten und im wesentlichen kugeligen Kornaufbaus eine geringere Hüllmaterialmenge ausreicht, als sie zur Umhüllung von durch Kristallisationsverfahren gewonnenem Natriumpercarbonat erforderlich ist.

Es war nicht vorhersehbar, daß durch Verwendung einer erfindungsgemäßen Dreistoffzerstäuberdüse sowohl eine ausreichende externe Mischung der Lösungen und Erhalt eines homogenen Produkts möglich ist, als auch auf einen phosphorhaltigen Kristallisationsinhibitor verzichtet werden kann; damit werden die Betriebskosten erniedrigt und ein ökologisches Problem vermieden. Es war weiterhin nicht zu erwarten, daß es durch Verwendung einer Dreistoffzerstäuberdüse mit einer Zentralrohrverlängerung möglich ist, Betriebsstörungen durch Ankrustungen an der Düse praktisch vollständig zu vermeiden.

### Beispiele

In einer Apparatur zur Wirbelschicht-Sprühgranulation mit Vorrichtungen zur Staubrückführung und Keimeinschleusung sowie einem klassierend wirkenden Austrag werden nach Fluidisieren von vorgelegtem Natriumpercarbonat mittels erfindungsgemäßer Dreistoffzerstäuberdüsen eine wäßrige Wasserstoffperoxidlösung und eine wäßrige Natriumcarbonatlösung, welche keinen Kristallisationsverzögerer enthielten, unter Verwendung von Luft als Treibmittel in die Wirbelschicht eingebracht. Die Düsen befanden sich innerhalb der Wirbelschicht und die Sprührichtung war dem Trocknungsgasstrom gleichgerichtet. Die Zentralrohrverlängerung betrug 3 Zentralrohrradien, die Mantelrohre endeten auf gleicher Höhe.

Die Tabelle zeigt wesentliche Betriebsparameter und Stoffdaten des hergestellten Natriumpercarbonats. Auch nach mehrtägigem kontinuierlichem Betrieb kam es weder in noch um die Düse zu Verstopfungen beziehungsweise Ankrustungen.

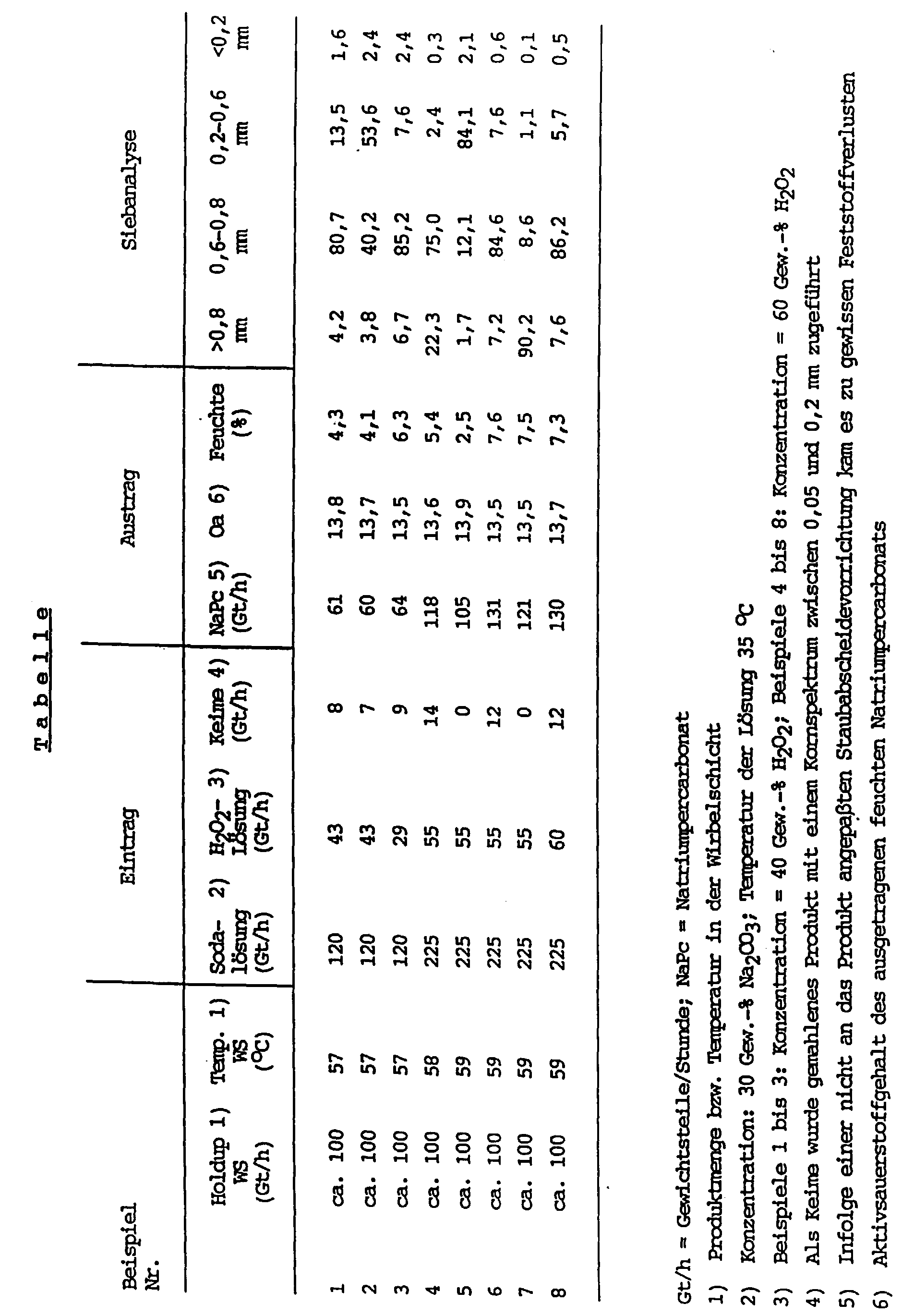

### Bezugszeichenliste

- 1: Düsenkörper
- 2: Düsenmundstück
- 3: Anschluß für Flüssigkeit (i)
- 4: Anschluß für Flüssigkeit (ii)
- 5: Anschluß für Treibgas
- 6: Kanal für Flüssigkeit (i)
- 7: Kanal für Flüssigkeit (ii)
- 8: Kanal für Treibgas
- 9a: Gewinde
- 9b: Gewinde
- 10: Zentralrohr
- 11: Mantelrohr (innen)
- 12: Mantelrohr (außen)
- 13: Ringspalt für Flüssigkeit (i)
- 14: Ringspalt für Treibgas
- 15: Zentralrohr-Verlängerung
- 16a: Drallkörper
- 16b: Drallkörper
- 17a: Verjüngung
- 17b: Verjüngung

## Patentansprüche

1. Verfahren zur Herstellung von granulatförmigem Natriumpercarbonat der Formel 2 Na₂CO₃ · 3 H₂O₂ durch Wirbelschicht-Sprühgranulation, wobei eine wäßrige Wasserstoffperoxidlösung und eine wäßrige Natriumcarbonatlösung mittels einer einen Düsenkörper und ein Düsenmundstück umfassenden Dreistoffzerstäuberdüse mit externer Mischung der Lösungen in eine Wirbelschicht, die Keime enthält, deren Abmessungen geringer sind als die der herzustellenden Granulatteilchen, gesprüht werden und gleichzeitig Wasser bei einer Wirbelschichttemperatur im Bereich von 40 bis 95 °C verdampft wird,
dadurch gekennzeichnet,
daß man eine Dreistoffzerstäuberdüse verwendet, deren Düsenmundstück ein Zentralrohr und zwei darum koaxial angeordnete Mantelrohre aufweist und dessen Zentralrohr an der Düsenspitze um mindestens einen Zentralrohrradius über die Enden der Mantelrohre hinausreicht, und daß man dem Zentralrohr und dem zwischen diesem und dem inneren Mantelrohr gebildeten Ringspalt jeweils eine der Lösungen und dem zwischen den Mantelrohren gebildeten äußeren Ringspalt ein Treibgas zuführt.

2. Verfahren nach Anspruch 1,
dadurch gekennzeichnet,
daß man eine Dreistoffzerstäuberdüse verwendet, deren Zentralrohr des Düsenmundstücks um 2 bis 10, insbesondere 3 bis 6 Zentralrohrradien über die Enden der Mantelrohre hinausreicht.

3. Verfahren nach einem der Ansprüche 1 oder 2,
dadurch gekennzeichnet,
daß man eine wäßrige Wasserstoffperoxidlösung mit einem H₂O₂-Gehalt von 40 bis 70 Gew.-% und eine wäßrige Natriumcarbonatlösung mit einem Na₂CO₃-Gehalt von 20 Gew.-% bis zur Sättigungskonzentration verwendet.

4. Verfahren nach einem der Ansprüche 1 bis 3,
dadurch gekennzeichnet,
daß man die Temperatur der Wirbelschicht im Bereich von 50 bis 70 °C hält.

5. Verfahren nach einem der Ansprüche 1 bis 4,
dadurch gekennzeichnet,
daß man die Srühgranulation in einer kontinuierlich betriebenen Wirbelschichtapparatur mit Keimeinschleusung und klassierend wirkendem Austrag des Granulats durchführt.

6. Verfahren nach einem der Ansprüche 1 bis 5,
dadurch gekennzeichnet,
daß man granulatförmiges Natriumpercarbonat der gewünschten Korngröße mit einer Feuchte zwischen 2 und 10 Gew.-% aus der Wirbelschichtapparatur abnimmt und nach Bedarf nachtrocknet oder zwecks Stabilitätserhöhung einer Nachbehandlung zuführt.

7. Verfahren nach einem der Ansprüche 1 bis 6,
dadurch gekennzeichnet,
daß man der Sprühdüse eine wäßrige Sodalösung und eine wäßrige Wasserstoffperoxidlösung im Molverhältnis von Soda zu H₂O₂ im Bereich von 1 zu 1,5 bis 1 zu 1,65 zuführt.

## Claims

1. Process for the production of granulated sodium percarbonate of the formula 2 Na₂CO₃ · 3 H₂O₂ by fluidised bed spray granulation, wherein an aqueous hydrogen peroxide solution and an aqueous sodium carbonate solution are sprayed using a three-fluid atomising nozzle comprising a nozzle body and nozzle mouthpiece with external mixing of the solutions into a fluidised bed containing nuclei, the dimensions of which are smaller than those of the granulate particles to be produced, and water is simultaneously evaporated at a fluidised bed temperature in the range from 40 to 95°C,
characterised in that
a three-fluid atomising nozzle is used, the nozzle mouthpiece of which has a central tube and two jacket tubes arranged coaxially around the central tube and the central tube of which, at the nozzle tip, extends beyond the end of the jacket tubes by at least one radius of the central tube and that one of the solutions is introduced into the central tube and one is introduced into the annular gap formed between the central tube and the inner jacket tube and a propellant gas is introduced into the outer annular gap formed between the jacket tubes.

2. Process according to claim 1,
characterised in that
a three-fluid atomising nozzle is used, the central tube of which nozzle mouthpiece extends beyond the end of the jacket tubes by 2 to 10, in particular by 3 to 6 radii of the central tube.

3. Process according to one of claims 1 or 2,
characterised in that
an aqueous hydrogen peroxide solution with an H₂O₂ content of 40 to 70 wt.% and an aqueous sodium carbonate solution with an Na₂CO₃ content of 20 wt.% up to the saturation concentration are used.

4. Process according to one of claims 1 to 3,
characterised in that
the temperature of the fluidised bed is maintained in the range from 50 to 70°C.

5. Process according to one of claims 1 to 4,
characterised in that
spray granulation is performed in a continuously operated fluidised bed apparatus with an inlet for nuclei and a classifying granulate outlet.

6. Process according to one of claims 1 to 5,
characterised in that
granulated sodium percarbonate of the desired grain size is discharged from the fluidised bed apparatus at a moisture content of between 2 and 10 wt.% and, if required, is post-dried or passed for post-treatment in order to increase stability.

7. Process according to one of claims 1 to 6,
characterised in that
an aqueous soda solution and an aqueous hydrogen peroxide solution are introduced into the spray nozzle in a molar ratio of soda to H₂O₂ in the range from 1:1.5 to 1:1.65.

## Revendications

1. Procédé de fabrication de percarbonate de sodium sous forme de granulé de formule 2 Na₂CO₃ . 3 H₂O₂ par granulation par pulvérisation en lit fluidisé, dans lequel une solution aqueuse de peroxyde d'hydrogène et une solution aqueuse de carbonate de sodium sont pulvérisées à l'aide d'une buse de pulvérisation pour trois substances comprenant un corps de buse et une pièce d'embouchure de buse, avec mélange externe des solutions de lit fluidisé, qui renferme des germes, dont les dimensions sont plus faibles que celles des particules de granulé qui doivent être produites, et en même temps on évapore l'eau à température de lit fluidisé dans la zone de 40 à 95°C,
caractérisé en ce qu'
on utilise une buse de pulvérisation pour trois substances dont la pièce d'embouchure de buse possède un tube central, et deux tubes enveloppe disposés autour de lui d'une manière coaxiale et dont le tube central s'étend sur la pointe de la buse d'au moins un rayon de tube central, sur les extrémités des tubes enveloppe et en ce que l'on amène une des solutions respectivement au tube central et à la fente ou passage circulaire formé entre celui-ci et le tube enveloppe intérieur et entre la fente ou passage circulaire extérieur formé entre les tubes enveloppe un gaz propulseur.

2. Procédé selon la revendication 1,
caractérisé en ce qu'
on utilise une buse de pulvérisation pour trois substances dont le tube central de la pièce d'embouchure de buse offre de 2 à 10, en particulier de 3 à 6, rayons de tube central sur les extrémités des tubes de couverture.

3. Procédé selon l'une des revendications 1 ou 2,
caractérisé en ce qu'
on utilise une solution aqueuse de peroxyde d'hydrogène ayant une teneur en H₂O₂ de 40 à 70 % en poids et une solution aqueuse de carbonate de sodium ayant une teneur en Na₂ CO₃ allant de 20 % en poids à la concentration de saturation.

4. Procédé selon l'une des revendications 1 à 3,
caractérisé en ce qu'
on maintient la température du lit fluidisé dans la zone de 50 à 70°C.

5. Procédé selon l'une des revendications 1 à 4,
caractérisé en ce qu'
on effectue la granulation en continu par pulvérisation dans un appareillage à lit fluidisé avec introduction de germes et évacuation par classification du granulé.

6. Procédé selon l'une des revendications 1 à 5,
caractérisé en ce qu'
on décharge le percarbonate de sodium sous forme de granulé de taille de grains désirée avec une humidité comprise entre 2 et 10 % en poids, de l'appareillage à lit fluidisé et, selon le besoin, on poursuit le séchage ou en vue de l'augmentation de la stabilité, on amène à un traitement ultérieur.

7. Procédé selon l'une des revendications 1 à 6,
caractérisé en ce qu'
on amène à la buse de pulvérisation une solution aqueuse de carbonate de sodium et une solution aqueuse de peroxyde d'hydrogène dans un rapport molaire de carbonate de sodium à H₂O₂, de 1 pour 1,5 à 1 pour 1,65.
